# DEMANDE DE BREVET EUROPEEN

(11) **EP 4 545 166 A1**
(43) Date de publication de la demande: **30.04.2025**
(21) Numéro de dépôt: 24202573.2
(22) Date de dépôt: 25.09.2024
(51) Int. Cl.: B01D 53/00, B01D 53/02, B01D 53/047, B01D 53/22, B01D 53/26, F25J 1/00, F25J 3/02

(54) **PROCÉDÉ ET APPAREIL DE DISTILLATION D'UN MÉLANGE DE DIOXYDE DE CARBONE, DE MONOXYDE DE CARBONE ET D'AZOTE**

(30) Priorité: 06.10.2023 FR 2310716
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: MARTY, Pascal, 75007 PARIS (FR); RODRIGUES, Guillaume, 75007 PARIS (FR); RIVOAL, Fabrice, 75007 PARIS (FR); MADELAINE, Laurette, 75007 PARIS (FR)
(74) Mandataire: Air Liquide

(57) **Abrégé**

Dans un procédé de séparation d'un gaz contenant du dioxyde de carbone, du monoxyde de carbone, de l'eau et de l'azote, le gaz (1) est séparé (5) par adsorption pour produire un gaz (7) enrichi en monoxyde de carbone et un gaz (9) enrichi en dioxyde de carbone, le gaz enrichi en dioxyde de carbone est refroidi par échange de chaleur indirect avec au moins un gaz (45, 47) provenant d'une colonne de distillation(43), ensuite par échange de chaleur indirect avec le liquide de cuve (67) de la colonne de distillation, ensuite par échange de chaleur avec deux cycles de réfrigération à circuit fermé (53, 55).

## Description

La présente invention est relative à un procédé et appareil de distillation d'un mélange de dioxyde de carbone, de monoxyde de carbone et d'azote, par exemple un gaz de gueulard d'un haut fourneau ou un autre gaz résiduaire d'une unité de production d'un métal ferreux.

Un gaz de gueulard de haut fourneau contient entre 15 et 35% mol de monoxyde de carbone.

La composition molaire typique d'un gaz de gueulard de haut fourneau est la suivante:
- H2: 4-5 %
- CO: 24-25 %
- CO2: 23-25 %
- N2: 40-45 %
- H2O: 3 %

Les extractions du CO₂ et de l'N₂ présents dans les gaz de gueulard des hauts fourneaux ont pour but de les valoriser:
- comme carburant vers des turbines à gaz (par exemple pour la génération d'électricité pour une aciérie intégrée) ou vers d'autres utilisateurs de l'aciérie (tels que les appareils récupérateur de chaleur pour les hauts fourneaux en mélange avec d'autres gaz combustibles (gaz de cokerie ou gaz naturel) pour préchauffer l'air enrichi)
- comme gaz réducteur du charbon dans le haut fourneau lui-même
- comme matière première pour la production de biocarburants Plusieurs technologies d'extraction/séparation du CO2 peuvent être envisagées: adsorption avec bascule de pression ou en anglais « Pressure Swing Adsorption » ou PSA, lavage aux amines. La séparation de l'azote du CO est plus difficile.

Le haut fourneau produit un gaz de gueulard qui est à basse pression, ensuite comprimé par un compresseur et envoyé se séparer par adsorption pour produire un débit enrichi en CO et appauvri en CO2 contenant également de l'hydrogène et de l'azote et un débit enrichi en CO2 et appauvri en CO contenant également de l'hydrogène.

Dans le cas d'un PSA traitant un gaz de gueulard comprimé à environ 8-10 bars, le rendement de récupération du CO à haute pression est typiquement supérieur à 80% (voire à 85%) pour des rendements correspondants d'extraction de CO2 à basse pression aux alentours de 88% et d'N2 de 15%.

On cherche à la fois à maximiser le rendement de récupération du CO et les rendements d'extraction du CO2/N2.

Un prétraitement du gaz de gueulard (captage des particules et de certains composés indésirables) peut être nécessaire en amont du PSA.

Le flux enrichi en CO généré par le PSA contient donc également beaucoup d'azote (environ 85% mol du débit de gaz de gueulard traité) car la sélectivité CO/N2 est très faible sur des adsorbants classiques. Il contient également de l'hydrogène et du CO2 (environ 12% du débit de gaz de gueulard traité).

Le débit enrichi en CO2 produit à basse pression par le PSA contient également le CO non adsorbé (environ 15% du débit de gaz de gueulard traité), de l'H2, de l'azote et l'eau présente dans le gaz de gueulard.

WO2012/076786 décrit un procédé de traitement de gaz de gueulard dans lequel le gaz de gueulard comprimé alimente un PSA, le produit du PSA est renvoyé au haut fourneau et le résiduaire du PSA est séparé à une température inférieure à 0°C.

US2022/0306464 décrit un procédé dans lequel le gaz à refroidir est refroidi par deux échangeurs en parallèle, du liquide de la colonne étant envoyé aux deux échangeurs. Une partie du rebouillage de la colonne est fournie par le produit sous pression.

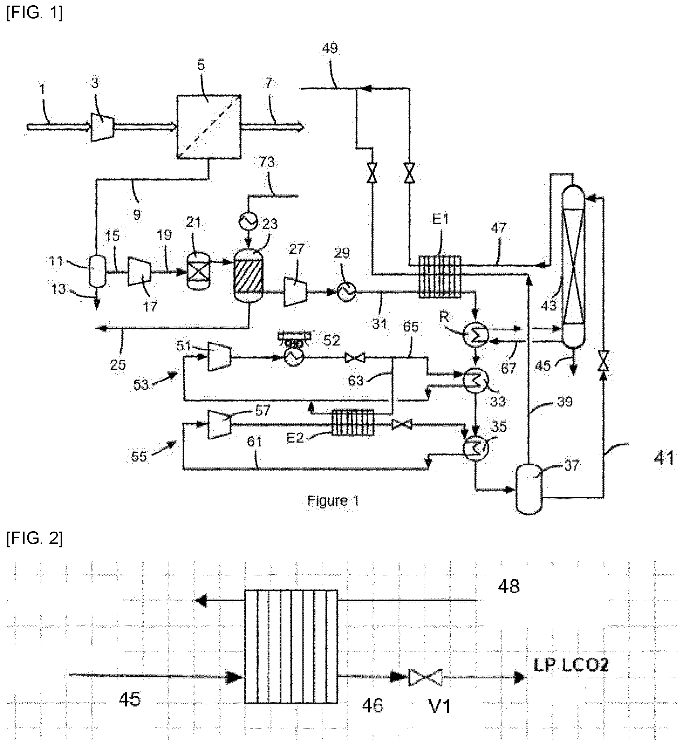

Exemple de bilan matière obtenu pour un PSA fonctionnant en mode "Rendement CO élevé" sur gaz de gueulard à environ 8 bars (références numériques correspondant à la [FIG.1]).

**[Tab 1]**

| | | | |
|---|---|---|---|
| | Entrée PSA 5 | Débit enrichi en CO 7 | Débit enrichi en CO2 9 |
| Débit molaire | 100 | 67 | 33 |
| H2 | 5 | 8 | 1 |
| CO | 25 | 32 | 11 |
| CO2 | 26 | 5 | 68 |
| N2 | 43 | 55 | 18 |
| H2O | 1 | 0 | 2 |

| | | | |
|---|---|---|---|
| *Rendement récupération* CO = 85.8 % *Rapport N2*/*CO approx. 1.72 entrée PSA et dans le débit enrichi en CO (produit PSA)* | | | |

Il est connu de séparer le gaz résiduaire de PSA H2 enrichi en CO2 produit à basse pression pour extraire le CO2 sous forme liquide ou gazeuse par condensation partielle et/ou par distillation. Le but de cette séparation est alors de séparer le CO2 de l'H2, ce dernier étant valorisé par re-traitement dans le PSA.

Cette idée peut être appliquée sur le gaz résiduaire d'un PSA positionné sur gaz de gueulard de haut fourneau pour séparer le CO2 du CO. Le gaz riche en CO/H2 ainsi produit pourra ainsi être valorisé soit comme carburant, soit comme produit avec ou sans retraitement.

Selon un objet de l'invention, il est prévu un procédé de séparation d'un gaz contenant du dioxyde de carbone, du monoxyde de carbone, de l'eau et de l'azote dans lequel:
i) Le gaz est séparé par adsorption ou perméation pour produire un gaz enrichi en monoxyde de carbone et appauvri en dioxyde de carbone et un gaz appauvri en monoxyde de carbone et enrichi en dioxyde de carbone
ii) Le gaz enrichi en dioxyde de carbone est séché, comprimé et refroidi, étant d'abord refroidi par échange de chaleur indirect avec au moins un gaz provenant d'une colonne de distillation, aucun liquide provenant de la colonne ne participant à l'échange de chaleur ensuite par échange de chaleur indirect avec le liquide de cuve de la colonne de distillation, ensuite par échange de chaleur avec un cycle de réfrigération à circuit fermé à l'ammoniac, ensuite par échange de chaleur avec un cycle de réfrigération à circuit fermé au CO2 ou au propane, étant partiellement condensé par le dernier des cycles de réfrigération
iii) Le gaz partiellement condensé est envoyé à un séparateur de phases, le liquide du séparateur de phases est détendu et envoyé en tête de la colonne de distillation pour s'y séparer, sans avoir été réchauffé en amont de la détente, et le gaz du séparateur de phases se réchauffe par échange de chaleur indirect avec le gaz enrichi en dioxyde de carbone séché et comprimé
iv) Le liquide de cuve est vaporisé par l'échange de chaleur avec le gaz et le liquide vaporisé est envoyé en cuve de la colonne comme seul gaz de rebouillage et
v) Un liquide riche en CO₂ est extrait en cuve de la colonne.

Selon d'autres aspects optionnels :
- une autre partie du liquide riche en CO2 se vaporise par échange de chaleur indirect avec le gaz enrichi en dioxyde de carbone séché comprimé et refroidi pour former un produit gazeux riche en CO2,
- un gaz de tête de la colonne se réchauffe par échange de chaleur indirect avec le gaz enrichi en dioxyde de carbone séché et comprimé,
- un échangeur de chaleur à plaques et à ailettes sert à refroidir le gaz enrichi en dioxyde de carbone séché et comprimé contre l'autre partie du liquide riche en CO2 et/ou
- le gaz de tête de la colonne et/ou le gaz du séparateur de phases,
- dans l'au moins un cycle de réfrigération, un réfrigérant est comprimé par un compresseur à vis ou à piston, refroidi, détendu, condensé, réchauffé et vaporisé par échange de chaleur avec le gaz enrichi en dioxyde de carbone séché et comprimé ayant déjà servi à vaporiser le liquide de cuve et renvoyé au compresseur,
- le gaz enrichi en dioxyde de carbone séché et comprimé ayant déjà servi à vaporiser le liquide de cuve est refroidi par un premier cycle de réfrigération, par exemple jusqu'à une température entre -28°C et -30°C, dans lequel un premier réfrigérant est comprimé par un premier compresseur à vis ou à piston, refroidi, détendu, réchauffé par échange de chaleur avec le gaz enrichi en dioxyde de carbone séché et comprimé ayant déjà servi à vaporiser le liquide de cuve et renvoyé au premier compresseur,
- le gaz enrichi en dioxyde de carbone séché et comprimé ayant déjà été refroidi par le premier cycle de réfrigération est refroidi par un deuxième cycle de réfrigération, par exemple jusqu'à une température entre -52°C et -53°C, dans lequel un deuxième réfrigérant est comprimé par un deuxième compresseur à vis ou à piston, refroidi, détendu, réchauffé par échange de chaleur avec le gaz enrichi en dioxyde de carbone séché et comprimé ayant déjà été refroidi par le premier cycle de réfrigération, et renvoyé au deuxième compresseur,
- une partie du premier réfrigérant détendue et condensée sert à refroidir le deuxième réfrigérant après compression dans le deuxième compresseur et avant sa détente, la partie du premier réfrigérant se vaporisant par échange de chaleur avec le deuxième réfrigérant dans un échangeur de chaleur,
- la partie du premier réfrigérant servant à refroidir le deuxième réfrigérant est à la même température que la partie du premier réfrigérant envoyé refroidir le gaz enrichi en dioxyde de carbone,
- la colonne opère à une pression inférieure ou égale à 21 bars abs,
- la colonne opère à une pression entre 10 et 15 bars abs, voire entre 12 et 14 bars et le dioxyde de carbone est produit à une pression inférieure à 10 bars abs.
- le gaz à séparer contient entre 15 et 35% mol de CO.
- le liquide riche en CO2 contient au moins 80% mol de CO2, voire au moins 90% mol de CO2 ou même 95% mol de CO2.
- le liquide riche en CO₂ extrait en cuve de la colonne est fourni à un client à 7 bara après sousrefroidissement et détente et la pression du gaz enrichi en dioxyde de carbone qui échange de la chaleur avec le liquide de cuve de la colonne de distillation est entre 30 et 40 bara.

Selon un autre objet de l'invention, il est prévu un appareil de séparation d'un gaz contenant du dioxyde de carbone, du monoxyde de carbone, de l'eau et de l'azote comprenant une unité de séparation par adsorption ou par perméation, des moyens pour envoyer le gaz se séparer dans l'unité de séparation pour produire un gaz enrichi en monoxyde de carbone et appauvri en dioxyde de carbone et un gaz appauvri en monoxyde de carbone et enrichi en dioxyde de carbone, un sécheur, un compresseur, des moyens pour envoyer le gaz enrichi en dioxyde de carbone être séché dans le sécheur, comprimé dans le compresseur, un premier moyen de refroidissement par échange de chaleur indirect avec au moins un gaz provenant d'une colonne de distillation, aucun liquide provenant de la colonne ne participant à l'échange de chaleur, un deuxième moyen de refroidissement par échange de chaleur indirect avec le liquide de cuve de la colonne de distillation, un troisième moyen de refroidissement par échange de chaleur avec un premier cycle de réfrigération à circuit fermé à l'ammoniac, un quatrième moyen de refroidissement par échange de chaleur avec un deuxième cycle de réfrigération à circuit fermé au CO2 ou au propane, des moyens pour envoyer le gaz comprimé dans le compresseur successivement au premier, au deuxième, au troisième et au quatrième moyen de refroidissement, étant partiellement condensé par le dernier des cycles de réfrigération, un séparateur de phases, des moyens pour envoyer le gaz partiellement condensé au séparateur de phases, des moyens pour détendre le liquide du séparateur de phases et pour l'envoyer en tête de la colonne de distillation pour s'y séparer, sans avoir été réchauffé en amont de la détente, et des moyens pour envoyer le gaz du séparateur de phases se réchauffer par échange de chaleur indirect avec le gaz enrichi en dioxyde de carbone séché et comprimé, des moyens pour envoyer le liquide de cuve vaporisé par l'échange de chaleur avec le gaz en cuve de la colonne comme seul gaz de rebouillage et des moyens pour extraire un liquide riche en CO₂ en cuve de la colonne.

Le premier ou deuxième cycle de réfrigération peut comprendre un compresseur à vis ou à piston, pour comprimer le réfrigérant, des moyens pour refroidir, détendre, condenser, réchauffer et vaporiser le réfrigérant par échange de chaleur avec le gaz enrichi en dioxyde de carbone séché et comprimé ayant déjà servi à vaporiser le liquide de cuve et renvoyé au compresseur.

L'invention sera illustrée de manière plus détaillée en se référant aux figures où :
[FIG.1] illustre une unité de séparation selon l'invention.
[FIG.2] illustre une partie optionnelle d'une unité de séparation selon l'invention.
[FIG.3] illustre une partie optionnelle d'une unité de séparation selon l'invention.
[FIG.4] est un graphique illustrant la relation entre l'énergie spécifique d'une unité de séparation selon l'invention et la pression de la colonne.

[FIG.1] illustre une unité de séparation dont la partie distillation est effectuée à moins que 0°C permettant d'extraire le CO2 45 d'un gaz résiduaire d'une unité d'adsorption à bascule de pression de type PSA 5, l'unité 5 traitant le gaz de gueulard 1 d'un haut fourneau. L'unité 5 produit un débit gazeux 7 enrichi en CO, en azote et en hydrogène et appauvri en CO2 et en eau et un débit gazeux 9 enrichi en CO2 et en eau et appauvri en CO, en azote et en hydrogène, constituant le gaz résiduaire du PSA à basse pression.

L'unité 5 peut en alternatif séparer le gaz de gueulard par perméation ou par un autre type d'adsorption.

Le débit gazeux 7 peut être renvoyé au haut fourneau ou utilisé pour produire du bioéthanol.

L'unité de séparation inclut
- des sécheurs 23 pour extraire l'eau contenue dans le gaz résiduaire du PSA
- éventuellement au moins une unité de séparation membranaire pour extraire le CO et l'H2 du CO2
- un compresseur 17, 27 de gaz résiduaire 15, 19
- deux cycle de réfrigération (NH3 et C3 et/ou CO2
- une condensation du CO2 en amont d'un séparateur de phase 37
- une colonne d'épuisement 43 produisant le CO2 purifié au moins sous forme liquide 45
- un échangeur de chaleur E1 permettant de refroidir le gaz résiduaire comprimé 31 de l'unité d'adsorption 5 et de vaporiser le CO2 purifié 45 si requis.

Une taille d'au plus 1000 t/j de CO2 est typique.

Dans cet exemple, la vapeur d'eau présente dans le gaz de gueulard 1 du haut fourneau est adsorbée par l'unité d'adsorption 5. Le gaz résiduaire humide 9 de l'unité d'adsorption 5 est séché par passage dans la capacité 11 où de l'eau et/ou d'autres condensats 13 sont enlevées.

Le débit séché 15 est comprimé dans un compresseur 17 formant le gaz 19 puis séché par adsorption de type TSA dans un sécheur 23 à l'entrée de l'unité de séparation fonctionnant à basse température. Les sécheurs sont en général localisés à l'un des inter-étages du compresseur 17, 27 de gaz résiduaire 19 (mais pas nécessairement). La régénération du sécheur 23 peut être effectuée par un gaz 73 externe non généré par l'unité de séparation à basse température (un gaz riche en azote par exemple) ou grâce à l'utilisation d'un flux sec généré par l'unité de séparation à basse température, par exemple le gaz 39 et/ou le gaz 47. Le gaz humide 25, qui est le gaz 73 chargé en eau, pourra être:
- soit recyclé en un point en amont des sécheurs 23, voire de l'unité d'adsorption PSA 5 ( lui-même pour augmenter les rendements de récupération des molécules H2/CO (éventuellement présents dans le gaz de régénération 73 et les produits du PSA) et du CO2 45)
- soit exporté comme carburant.

La régénération du sécheur 23 peut être effectuée à basse ou à haute pression.

La teneur en eau dans le gaz résiduaire 19 préalablement aux sécheurs 23 pourra être réduite par un traitement préliminaire de type lavage à l'eau dans une tour 21. Cette tour 21 peut non seulement permettre d'enlever des particules solides et des impuretés solubles mais aussi de refroidir le gaz 19 en amont du sécheur 23.

Le gaz résiduaire 31 séché et comprimé à une pression entre 20-60 bars, typiquement 40-45 bars) dans le compresseur 27 est ensuite refroidi aux environs de -50°C pour le condenser partiellement formant une phase riche en CO2 et est envoyé à un séparateur de phases 37.

Le liquide 41 du séparateur de phases 37 alimente la colonne 43. La phase gazeuse 39 provenant du pot séparateur 37 contient majoritairement les composés plus légers que le CO2 mais également du CO2 non condensé. La température de condensation du gaz résiduaire 31 sera limitée (en général aux alentours de -52°C) de façon à éviter le risque de formation de cristaux de CO2 en tout point du procédé. Le gaz résiduaire 31 peut être refroidi par un certain nombre de fluides ou un élément:
- De l'eau dans le refroidisseur 29
- La fraction gazeuse 39 du pot 37 dans un échangeur à plaques et à ailettes E1 par exemple
- Le gaz de tête 47 de la colonne d'épuisement de CO2 43 dans un échangeur à plaques et à ailettes E1 par exemple
- Deux réfrigérants externes (NH3, C3H8, CO2,) générés par des cycles de froid classiques (compression/détente du frigorigène), intégrés entre eux ou pas
- Le rebouilleur R de la colonne d'épuisement de CO2 43

Le liquide riche en CO2 41 provenant du pot 37 est ensuite détendu (typiquement à une pression aux alentours de 20 bars) et envoyé vers la colonne d'épuisement 43. La formation de solide est évitée par la régulation de la colonne à une pression suffisante telle que T ≥ - 54.5 °C après la vanne de détente sans préchauffe du flux riche en CO2 41 avant la vanne de détente.

Dans l'exemple de la figure, le gaz résiduaire a été refroidi dans l'échangeur de chaleur E1 et ensuite dans le rebouilleur R par échange de chaleur avec le liquide de cuve 67 de la colonne 43.

Ensuite le gaz résiduaire refroidi à environ -12°C est refroidi dans un échangeur de chaleur 33 par échange de chaleur indirect avec un premier cycle de réfrigération à circuit fermé, par exemple, à l'ammoniac.

Dans ce premier cycle 53, un premier réfrigérant est comprimé dans un compresseur à vis ou à piston 51 jusqu'à une pression supérieure à 14 bars abs, refroidi jusqu'à 35°C par un refroidisseur à l'eau 52, détendu dans une vanne jusqu'à la pression atmosphérique et une température de -30°C pour former un liquide et envoyé à l'échangeur 33 pour refroidir le gaz résiduaire jusqu'à entre -28°C et -30°C. Le premier réfrigérant réchauffé et vaporisé dans l'échangeur de chaleur 33 est envoyé au compresseur 51.

Tout le premier réfrigérant peut-être envoyé à l'échangeur 33 et ensuite au compresseur 51. Selon une variante, le premier réfrigérant détendu dans la vanne est divisé en deux parties liquides 63, 65, seule la partie 65 étant envoyé à l'échangeur 33 pour refroidir le gaz résiduaire jusqu'à entre -28°C et -30°C, l'autre partie 63, à la même température que la partie 65, étant réchauffée et vaporisée dans un échangeur de chaleur E2 par échange de chaleur indirect avec le deuxième cycle de réfrigération. Les deux parties réchauffées et vaporisées sont ensuite mélangées et envoyées au compresseur 51.

Le gaz résiduaire refroidi dans l'échangeur 33 jusqu'à entre -28°C et -30°C poursuit son refroidissement dans l'échangeur 35 par échange de chaleur indirect avec le deuxième cycle de réfrigérant à circuit fermé où circule un deuxième réfrigérant, pouvant être le CO2 ou du propane.

Le deuxième réfrigérant est comprimé dans un compresseur à vis ou à piston 57 depuis une pression de 5,5 bars jusqu'à une pression supérieure à 16 bars, le deuxième réfrigérant comprimé étant refroidi dans l'échangeur E2 contre le premier réfrigérant liquéfié 63, détendu jusqu'à 5,5 bara et une température de -54°C dans une vanne, envoyé à l'échangeur de chaleur 35 à -54°C ET 5,6 bara sous forme liquide pour refroidir le gaz résiduaire jusqu'à entre -52°C et-53°C. Le deuxième réfrigérant, réchauffé dans l'échangeur de chaleur 35, est envoyé comme débit 61 à l'entrée du compresseur 57.

La vaporisation du premier réfrigérant 63 dans l'échangeur de chaleur E2 à -30°C permet de refroidir le deuxième réfrigérant jusqu'à -28°C, donc de gagner sur le taux de détente du deuxième cycle de réfrigération 55.

La présence de l'échangeur E2 reliant les deux cycles 53, 55 est optionnelle.

Le gaz résiduaire sort de l'échangeur 35 à -52°C sous forme diphasique.

Pour chaque pression de compression donnée, il existe une pression de colonne d'épuisement 43 minimale évitant la formation de solide après la vanne de détente du liquide 41. La formation de CO2 solide apparaît aux environs de -56.4°C. Il est souhaitable de conserver une approche de 2°C par rapport à cette température, c'est à dire à obtenir une température au plus bas de -54.4°C en aval de la vanne de détente sur le liquide 41.

Plus la pression de compression choisie est faible, plus la pression de la colonne d'épuisement 43° peut être réduite ; mais l'énergie spécifique associée à la capture du CO2 augmente fortement lorsque la pression de compression est inférieure à 30 bars, en raison d'une forte portion de gaz non condensé recyclé à l'unité d'adsorption 5, et donc comprimé en boucle. Cependant, à une pression de compression inférieure à 20 bars, le schéma nécessite un étage de compression en moins.

Avec le schéma revendiqué, on peut donc produire le CO2 liquide 45 directement à des pressions inférieures à 20 bars sans préchauffage du flux riche en CO2 41 en amont de la vanne de détente même si ce n'est pas l'optimum énergétique.

La colonne d'épuisement 43 permet d'extraire les gaz plus légers que le CO2 par exemple H2, CO, N2 et d'autres impuretés présents dans le CO2.

La spécification requise pour le CO2 en fond de colonne 43 sera obtenue en jouant avec les paramètres d'épuisement par exemple le taux de rebouillage en fond. Le taux de condensation en tête de la colonne d'épuisement est fourni par le niveau de détente du liquide riche en CO2 41. La chaleur nécessaire au rebouillage R pourra être prise sur le gaz résiduaire comprimé 31.

La phase gazeuse 39 provenant du pot 37 est réchauffée par le gaz résiduaire comprimé 31 dans l'échangeur E1 générant un premier fluide. Le gaz de tête 47 de la colonne 43 est réchauffé par le gaz résiduaire comprimé 31 générant un deuxième fluide.

Les premier et deuxième fluides sont combinés pour former un gaz résiduel 49.

Si le CO2 purifié 45 doit être produit sous forme liquide, il sera directement soutiré du fond de la colonne d'épuisement 43.

Si le CO2 purifié doit être produit sous forme gazeuse (non représenté), il pourra être vaporisé en partie par le gaz résiduaire du PSA comprimé 31 avant de passer dans l'échangeur de chaleur E1 et d'être exporté (non représenté).

La récupération du froid du CO2 liquide purifié 45 permet en outre de réduire les besoins de froid complémentaires pour le refroidissement du gaz résiduaire comprimé 31 donc de réduire également les consommations énergétiques des cycles de froid externes 53, 55.

Un bilan matière typique du procédé est indiqué ci-dessous:

**[TAB 2]**

| | Gaz enrichi en CO2 9 | Liquide riche en CO₂ 41 | Gaz 39 | Gaz 47 | CO₂ liquide 45 |
|---|---|---|---|---|---|
| Pression bara | 1.05 | 45 | 45 | 21 | 21 |
| T °C | 40 | -52 | -52 | -53 | -20 |
| Débit mole % | 100 | 65 | 35 | 6 | 59 |
| H2 | 1 | 0 | 2.9 | 0.2 | 0 |
| CO | 11 | 2.2 | 29.9 | 24.6 | 0 |
| CO₂ | 68 | 94.1 | 21.2 | 33.9 | 100 |
| N2 | 18 | 3.7 | 46 | 41.3 | 0 |
| H₂O | 2 | 0 | 0 | 0 | 0 |
| Rapport N₂/CO | | | 1.53 | 1.7 | |

L'optimisation du compresseur 17, 27 de gaz résiduaire et des cycles de froid externes permettent d'obtenir des consommations énergétiques spécifiques de l'ordre de 200 kW/ton CO2 liquide produit.

On peut associer à chaque pression de compression donnée un domaine opératoire de pression pour la colonne, permettant à la fois
- d'éviter la formation de solide (Pression minimum)
- d'optimiser l'intégration thermique avec le rebouillage (Pression maximum). L'énergie spécifique décroît avec l'augmentation de la pression de la colonne d'épuisement, résultant en un produit CO₂ liquide à plus haute pression. En dessous d'une pression de compression de 30 bars, l'énergie spécifique augmente fortement.

Avec le schéma revendiqué, il est avantageux de produire le CO₂ liquide à une pression supérieure à 8 bars, préférentiellement supérieure à 12 bars (pression de la colonne d'épuisement) si l'on cherche à minimiser l'énergie spécifique.

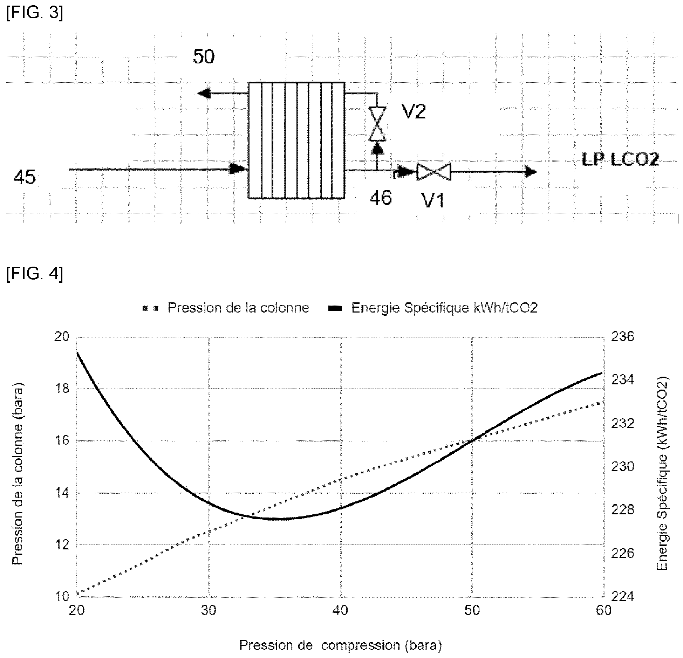

Si on voulait produire du CO₂ liquide à plus basse pression (c'est à dire à pression plus basse que la pression minimum de la colonne d'épuisement), il faudrait sous-refroidir le CO₂ liquide 45 produit par la colonne d'épuisement 43 (jusqu'à -52°C par exemple) avant de le détendre, comme illustré dans les Figures 2 et 3.

Dans la Figure 2, le liquide 45 est refroidi dans un échangeur de chaleur E3 par échange de chaleur avec un fluide externe 48 formant du liquide refroidi 46 qui est ensuite détendu dans une vanne V1. Ce liquide 46 constitue le produit à plus basse pression.

Dans la Figure 3, le liquide 45 est refroidi dans un échangeur de chaleur E3 en prenant une partie 50 du liquide, en le détendant dans une vanne V2 et en l'envoyant à l'échangeur de chaleur E3, en laissant une autre partie du liquide 46 qui est ensuite détendue dans la vanne V1. Ce liquide 46 constitue le produit à plus basse pression. Ce procédé correspond à celui de FR3122918B.

Les procédés des Figures 2 et 3 permettent de détendre le liquide 45 de la Figure 1. Dans ce cas, on peut par exemple produire du CO₂ liquide à 7 bars avec 100 ppm de CO, et une pureté de CO₂ > 99.9% à partir de la composition de gaz de gueulard 1 mentionnée à la première page de ce document.

La Figure 4 montre l'évolution de la pression minimale de la colonne d'épuisement 43 et de l'énergie spécifique pour produire le CO₂ liquide 45 à 7 bars après sousrefroidissement et détente (comme illustré dans les Figures 2 et 3) en fonction de la pression de compression du gaz résiduaire 31.

La température du CO₂ liquide en aval de l'échangeur E3 et en amont de la vanne V1 est égale ou inférieure à -50°C. La pression à laquelle le CO₂ est détendue par la vanne V1 est 7 bars et la température du CO₂ détendu est égale ou inférieure à la température d'équilibre de liquide à 7 bars.

Pour produire le CO₂ liquide à 7 bars, on sous-refroidit la production de CO₂ liquide 45 à T ≤ -50°C (en aval de l'échangeur E3 et en amont de la vanne V1) avant de détendre le liquide dans la vanne V1. Ce sous refroidissement peut être fait:
- via le groupe frigorifique externe de CO₂ existant (en cascade avec le cycle NHs) - Figure 2
- ou bien par détente dans la vanne V2 d'une fraction 50 de la production permettant une approche d'au moins 2°C dans l'échangeur E3- Figure 3; cette fraction 50 peut être recyclée en inter-étage du train de compression 17, 27 du gaz résiduaire si l'on veut améliorer le rendement de récupération du CO2.

L'énergie spécifique présente un minimum pour une pression de compression du gaz résiduaire 31 entre 30 et 40 bars. L'énergie spécifique est réduite avec la mise en place d'un cycle externe existant.

L'énergie spécifique pour la production de CO₂ liquide à 7 bars varie de moins de 1% entre les schémas à pression minimale et à pression maximale de colonne d'épuisement : en effet, la séparation est facilitée par une colonne à plus haute pression mais le sous refroidissement demande plus d'énergie.

Il est possible de produire directement du CO₂ liquide à 7 bars dans la colonne d'épuisement La compression du gaz résiduaire 31 pourra alors être limitée à 10 bars. L'énergie spécifique calculée dans le cas de notre exemple est de 260 kWh/tCO2. Ce schéma présente l'avantage d'avoir un compresseur de gaz résiduaire de taille réduite. Il est possible de produire du CO₂ liquide à 7 bars sans risque de formation de solide pour une énergie moindre (-230kWh/t CO₂) par détente de la production liquide de la colonne d'épuisement 43 opérée à une pression supérieure à 7 bars après sous refroidissement. Il existe un optimum entre 30 et 40 bars de compression du gaz résiduaire 9, 31 avec une colonne 43 travaillant entre 10 et 25 bars. L'énergie spécifique est d'autant plus basse que la pression de la colonne 43 est basse, et le sous refroidissement fourni par un cycle externe (c'est-à-dire une boucle de réfrigération séparée, fermée, avec compresseur, condenseur à eau et vaporisation par contact indirect avec le procédé). En revanche, le compresseur 17, 27 de gaz résiduaire sera plus gros.

Avec le schéma selon l'invention, si on veut produire du CO₂ liquide à une pression P1 inférieure à 12 bars, on préférera
- Comprimer le gaz résiduaire à une pression de 30 à 40 bar
- Opérer la colonne d'épuisement 43 à une pression de 10 à 25 bars
- Sousrefroidir la production de liquide avant détente avec un cycle CO₂ externe fermé
plutôt que de produire directement le CO₂ à la pression requise P1.

Exemple: production de CO₂ gazeux à 7 bars avec le schéma selon l'invention: → Pour une pression de compression du gaz résiduaire 31 de 45 bars, la pression minimale de fonctionnement de la colonne d'épuisement 43 est de 15 bars. Le fluide à 45 bars est refroidi à -52°C, la fraction liquide 41 détendue à 15 bars (et à -54.5°C) est introduite dans la colonne d'épuisement 43. 38% (débit 50) de la production liquide 45 (15 bars, -28°C) est détendue à 5.7 bars (-54°C) afin de pouvoir refroidir le fluide 46 à -52°C (et en supposant 2°C d'approche dans l'échangeur). Les fluides moyenne pression (MP) 46 et basse pression (BP) 50 sont réchauffés dans l'échangeur de chaleur E1. Le fluide moyenne pression 46 est ensuite détendu à 7 bars, le fluide 50 BP est comprimé jusqu'à 7 bars et ils sont mélangés pour former le produit CO2 gazeux à 7 bars. L'énergie spécifique est de 160 kWh/t_{CO2}. Si le CO2 gazeux doit être produit à une pression supérieure à la pression de la colonne d'épuisement, le fluide MP 46 n'est pas détendu et la compression des fluides BP 50 et MP 46 est mutualisée.

Pour éviter l'ajout d'une machine pour comprime le produit, le fluide BP 50 peut être détendu à (7 bars + perte de charge) avant l'échangeur de chaleur E1, le fluide MP 46 restant détendu à 7 bars après l'échangeur de chaleur E1, puis le fluide MP 46 et le fluide BP 50 sont mélangés. Dans ce cas, le fluide 31 ne peut plus être refroidi à -52°C mais à une température supérieure (dans l'exemple d'une pression de compression du gaz résiduaire de 45 bars, à - 46.5°C). La fraction gazeuse recyclée 39 est donc plus importante et l'énergie spécifique augmente (+7 kWh/t_{CO2} dans l'exemple). En revanche, la pression minimum de la colonne est plus faible que dans le cas précédent (10.8 bars dans notre exemple).

## Revendications

1. Procédé de séparation d'un gaz contenant du dioxyde de carbone, du monoxyde de carbone, de l'eau et de l'azote dans lequel:
i) Le gaz (1) est séparé (5) par adsorption ou perméation pour produire un gaz (7) enrichi en monoxyde de carbone et appauvri en dioxyde de carbone et un gaz (9) appauvri en monoxyde de carbone et enrichi en dioxyde de carbone
ii) Le gaz enrichi en dioxyde de carbone est séché (11, 23), comprimé (17, 27) et refroidi, étant d'abord refroidi par échange de chaleur indirect avec au moins un gaz (45, 47) provenant d'une colonne de distillation(43), aucun liquide provenant de la colonne ne participant à l'échange de chaleur, ensuite par échange de chaleur indirect avec le liquide de cuve (67) de la colonne de distillation, ensuite par échange de chaleur avec un premier cycle de réfrigération à circuit fermé à l'ammoniac (53, 55), ensuite par échange de chaleur avec un deuxième cycle de réfrigération à circuit fermé au CO2 ou au propane (53, 55), étant partiellement condensé par le dernier des cycles de réfrigération
iii) Le gaz partiellement condensé est envoyé à un séparateur de phases (37), le liquide (41) du séparateur de phases est détendu et envoyé en tête de la colonne de distillation pour s'y séparer, sans avoir été réchauffé en amont de la détente, et le gaz du séparateur de phases se réchauffe par échange de chaleur indirect avec le gaz enrichi en dioxyde de carbone séché et comprimé
iv) Le liquide de cuve (67) est vaporisé par l'échange de chaleur avec le gaz et le liquide vaporisé est envoyé en cuve de la colonne comme seul gaz de rebouillage et
v) Un liquide riche en CO₂ (45) est extrait en cuve de la colonne.

2. Procédé selon la revendication 1 dans lequel dans le premier ou deuxième cycle de réfrigération (53, 55), un réfrigérant est comprimé par un compresseur à vis ou à piston (51, 57), refroidi, détendu, condensé, réchauffé et vaporisé par échange de chaleur (33, 35) avec le gaz enrichi en dioxyde de carbone séché et comprimé ayant déjà servi à vaporiser le liquide de cuve et renvoyé au compresseur.

3. Procédé selon la revendication 2 dans lequel le gaz enrichi en dioxyde de carbone séché et comprimé ayant déjà servi à vaporiser le liquide de cuve est refroidi par le premier cycle de réfrigération (53), par exemple jusqu'à une température entre - 28°C et -30°C, dans lequel l'ammoniac est comprimé par un premier compresseur à vis ou à piston (51), refroidi, détendu, réchauffé par échange de chaleur(33) avec le gaz enrichi en dioxyde de carbone séché et comprimé ayant déjà servi à vaporiser le liquide de cuve et renvoyé au premier compresseur.

4. Procédé selon la revendication 3 dans lequel le gaz enrichi en dioxyde de carbone séché et comprimé ayant déjà été refroidi par le premier cycle de réfrigération (53) est refroidi par le deuxième cycle de réfrigération (55), par exemple jusqu'à une température entre -52°C et -53°C, dans lequel le CO2 ou le propane (61) est comprimé par un deuxième compresseur à vis ou à piston (57), refroidi, détendu, réchauffé par échange de chaleur avec le gaz enrichi en dioxyde de carbone séché et comprimé ayant déjà été refroidi par le premier cycle de réfrigération, et renvoyé au deuxième compresseur.

5. Procédé selon la revendication 4dans lequel une partie (63) de l'ammoniac détendue et condensée sert à refroidir le CO2 ou le propane (61) après compression dans le deuxième compresseur (57) et avant sa détente, la partie de l'ammoniac se vaporisant par échange de chaleur avec le CO2 ou du propane dans un échangeur de chaleur (E2).

6. Procédé selon la revendication 5 dans lequel la partie (63) de l'ammoniac servant à refroidir le CO2 ou le propane est à la même température que la partie (65) de l'ammoniac envoyé refroidir le gaz enrichi en dioxyde de carbone.

7. Procédé selon une des revendications précédentes dans lequel la colonne (43) opère à une pression inférieure ou égale à 21 bars abs.

8. Procédé selon une des revendications précédentes dans lequel la colonne (43) opère à une pression entre 10 et 15 bars abs, voire entre 12 et 14 bars et le dioxyde de carbone (49) est produit à une pression inférieure à 10 bars abs.

9. Procédé selon une des revendications précédentes dans lequel le gaz à séparer (1) contient entre 15 et 35% mol de CO.

10. Procédé selon une des revendications précédentes dans lequel le liquide riche en CO2 (45) contient au moins 80% mol de CO2, voire au moins 90% mol de CO2 ou même 95% mol de CO2.

11. Procédé selon une des revendications précédentes dans lequel le liquide riche en CO₂ (45) extrait en cuve de la colonne est fourni à un client à 7 bara après sousrefroidissement et détente et la pression du gaz enrichi en dioxyde de carbone qui échange de la chaleur (R) avec le liquide de cuve (67) de la colonne de distillation est entre 30 et 40 bara.

12. Appareil de séparation d'un gaz contenant du dioxyde de carbone, du monoxyde de carbone, de l'eau et de l'azote comprenant une unité (5) de séparation par adsorption ou par perméation, des moyens pour envoyer le gaz se séparer dans l'unité de séparation pour produire un gaz (7) enrichi en monoxyde de carbone et appauvri en dioxyde de carbone et un gaz (9) appauvri en monoxyde de carbone et enrichi en dioxyde de carbone, un sécheur (11, 23), un compresseur (17, 27), des moyens pour envoyer le gaz enrichi en dioxyde de carbone être séché dans le sécheur (11, 23), comprimé dans le compresseur (17, 27), un premier moyen de refroidissement (E1) par échange de chaleur indirect avec au moins un gaz (45, 47) provenant d'une colonne de distillation(43), aucun liquide provenant de la colonne ne participant à l'échange de chaleur, un deuxième moyen de refroidissement (R) par échange de chaleur indirect avec le liquide de cuve (67) de la colonne de distillation, un troisième moyen de refroidissement (33) par échange de chaleur avec un premier cycle de réfrigération à circuit fermé à l'ammoniac (53, 55), un quatrième moyen de refroidissement (35) par échange de chaleur avec un deuxième cycle de réfrigération à circuit fermé au CO2 ou au propane (53, 55), des moyens pour envoyer le gaz comprimé dans le compresseur successivement au premier, au deuxième, au troisième et au quatrième moyens de refroidissement, étant partiellement condensé par le dernier des cycles de réfrigération, un séparateur de phases (37), des moyens pour envoyer le gaz partiellement condensé au séparateur de phases (37), des moyens pour détendre le liquide (41) du séparateur de phases et pour l'envoyer en tête de la colonne de distillation pour s'y séparer, sans avoir été réchauffé en amont de la détente, et des moyens pour envoyer le gaz du séparateur de phases se réchauffer par échange de chaleur indirect avec le gaz enrichi en dioxyde de carbone séché et comprimé, des moyens pour envoyer le liquide de cuve (67) vaporisé par l'échange de chaleur avec le gaz en cuve de la colonne comme seul gaz de rebouillage et des moyens pour extraire un liquide riche en CO₂ (45) en cuve de la colonne.

13. Appareil selon la revendication 12 dans lequel le premier ou deuxième cycle de réfrigération (53, 55), comprend un compresseur à vis ou à piston (51, 57), pour comprimer le réfrigérant, des moyens pour refroidir, détendre, condenser, réchauffer et vaporiser le réfrigérant par échange de chaleur (33, 35) avec le gaz enrichi en dioxyde de carbone séché et comprimé ayant déjà servi à vaporiser le liquide de cuve et renvoyé au compresseur.
